# EUROPÄISCHE PATENTSCHRIFT

(11) **EP 0 455 766 B1**
(45) Veröffentlichungstag und Bekanntmachung des Hinweises auf die Patenterteilung: **08.03.1995**
(21) Anmeldenummer: 90916472.5
(22) Anmeldetag: 13.11.1990
(51) Int. Cl.: F16D 55/2265, F16D 65/097, F16D 65/092

(54) **NIEDERHALTEFEDER FÜR TEILBELAG-SCHEIBENBREMSEN**
RETAINING SPRING FOR SPOT-TYPE DISC BRAKES
PINCE-RESSORT POUR FREINS A DISQUES A GARNITURE PARTIELLE

(30) Priorität: 24.11.1989 DE 3938881; 06.07.1990 DE 4021566
(43) Veröffentlichungstag der Anmeldung: 13.11.1991
(73) Patentinhaber: ALFRED TEVES GmbH, 60441 Frankfurt (DE)
(72) Erfinder: KLIMT, Ulrich, D-6114 Gro -Umstadt (DE); HALASY-WIMMER, Georg, D-6236 Eschborn (DE); RÜCKERT, Helmut, D-6107 Reinheim 3 (DE); JAKOB, Matthias, D-6000 Frankfurt/Main 56 (DE)
(74) Vertreter: Portwich, Peter
(86) Internationale Anmeldenummer: EP9001940
(87) Internationale Veröffentlichungsnummer: WO9108401

(56) Entgegenhaltungen:
- EP-A- 32 462
- EP-A- 203 841
- DE-A- 2 345 733
- DE-A- 3 526 114
- GB-A- 2 029 532
- Patent Abstracts of Japan, Band 8, Nr. 152 (M-309)(1589), 14. Juli 1984

## Beschreibung

Die Erfindung betrifft die Abstützung von Bremsbacken in Scheibenbremsen durch Niederhaltefedern, wobei die Federn vorzugsweise lösbar im Bremssattel gehalten sind.

Im allgemeinen sind Bremsbacken an Führungen der Scheibenbremsen abgestützt und Mitnahmekräfte werden von der Bremsbacke über die Führungen auf den Fahrzeugrahmen übertragen. In der Regel ist zwischen den Führungen und der Bremsbacke ein Spiel vorgesehen, damit die Bremsbacke beim Anziehen und Lösen der Bremse zur Bremsscheibe und von dieser weg gleiten kann. Um Klappergeräusch der Bremsbacke an den Führungen zu vermeiden, sind bereits Federn bekannt worden, die an Bremsbacken befestigt werden und diese gegen ihre Führungen vorspannen.

Bei der Montage bzw. Demontage von Bremssätteln, beispielsweise zur Auswechslung von Bremsbacken, besteht bei derartigen bekannten Niederhaltefedern das Problem, daß die entweder fest mit den Bremsbacken verbundenen Federn nicht mehr wiederverwendet werden können oder die Federn speziell von den Bremsbacken demontiert und hernach auf die neuen Bremsbacken wieder aufgebracht werden müssen. Dabei ist ein Verlust derartiger Federn nicht auszuschließen.

Aus der DE-OS 23 45 733 ist eine sich an dem Gehäusedeckel abstützende Blattfeder bekannt, die im Bremssattel lösbar montiert und gegen Herausfallen gesichert ist. Da die dort verwendete Feder sich in radialer Richtung nur durch relativ weit auseinanderliegende Arme an der Bremsbacke abzustützen vermag, ist sie verhältnismäßig voluminös.

Eine Niederhaltefeder ist ebenfalls aus der EP-A1-0203841 bekannt. Die Feder ist in einem Bremsengehäuse gehalten und weist zwei Schenkel auf, von denen ein erster Schenkel tangential federnd auf einen ersten Vorsprung und ein zweiter Schenkel radial federnd auf einen zweiten Vorsprung der Bremsbacke einwirkt. Die Teilbelag-Scheibenbremse aus Bremsträger, Bremsbacken, Bremsengehäuse und Feder ist zu einer Einheit vormontiert.

Aus der EP-PS 0 032 462 ist eine stangenförmige Niederhaltefeder bekannt, die am Bremssattel gehalten ist. An Belagträgerplatten der Bremsbacken sind Halteteile gebildet, die mit der Feder in Eingriff stehen. Wenn der Bremssattel vom Bremsträger abgenommen wird, gelangen die Reibbeläge am Bremssattel über die Feder zur Aufhängung. Dabei greift nachteilig ein parallel zur Achse ausgebildetes stangenförmiges Teil der Feder in beide Bremsbacken ein, so daß nachteilig nicht zwischen den einzelnen Belangen für die äußere und die innere Bremsbacke unterschieden ist.

Aufgabe der Erfindung ist es, eine in dem Bremsengehäuse lösbar gehaltene Niederhaltefeder anzugeben, welche preiswert herzustellen und einfach zu handhaben ist und ein geringes Gewicht besitzt.

Die Lösung der Aufgabe ergibt sich aus dem kennzeichnenden Teil des Patentanspruchs 1. Die erfindungsgemäße Feder ist kompakt und benötigt wenig Einbauraum. Sie berücksichtigt dabei die Belange der äußeren und inneren Bremsbacke. Weiterhin wird die Montage des Bremsengehäuses, in das die Feder bereits eingesetzt ist, erleichtert. Bei der Montage kann das Bremsengehäuse einfach auf die Bremsbacken aufgesetzt werden.

In einer bevorzugten Ausführungsform der Erfindung gemäß Anspruch 2 kann die Niederhaltefeder durch Zusammenpressen ihrer V-förmigen Schenkel leicht in eine hinterschnittene Öffnung des Bremsengehäuses eingesetzt werden. Dabei stützen sich die äußeren Kanten von Flügeln der Feder in radialer Richtung gegen die Gehäusewände ab, während die inneren Kanten dieser Flügel sich gegen Kanten der Bremsbacken legen und eine radiale Bewegung dieser bedämpfen. Zweckmäßigerweise wird die hinterschnittene Öffnung in dem Bremsengehäuse auch in radialer Richtung verlaufende Anlageflächen besitzen, gegen welche sich die radialen Kanten der Flügel legen, so daß eine axiale Bewegung der Feder entgegen der axialen Bewegung der Bremsbacken verhindert wird.

Wichtig für die Erfindung ist weiterhin die Schwenkung der Flügelebene gegenüber der Schenkelebene, da hierdurch sehr weitgehend die Elastizität der Feder gegenüber einer radialen Belastung durch die Bremsbacken verändert werden kann. In sich starre Flügel vorausgesetzt, würde bei einer Schwenkung der Flügel in eine zur Symmetrieebene parallele Ebene in radialer Richtung überhaupt keine Federwirkung zustandekommen, während bei einer Schwenkung in die tangentiale Ebene die Federkraft davon abhängt, wie die Flügel an den Schenkeln befestigt sind. Man stellt daher erfindungsgemäß die beiden Schenkel schräg zu beiden Ebenen.

Um die federnde Wirkung der erfindungsgemäßen Niederhaltefeder zu verbessern und eine zusätzliche Abstützung in radialer Richtung, aber auch in axialer Richtung der Feder zu erhalten, empfiehlt sich in Weiterbildung der Erfindung eine Merkmalskombination nach Anspruch 2. Dabei läßt sich durch die Ausgestaltung des zweiten Flügels die Feder in optimaler Weise an die Form des Bremsengehäuses anpassen. Vorzugsweise kann der zweite Flügel zwischen der Stoßstelle der Schenkel und dem ersten Flügel angebracht sein, so daß die dem Bremskolben zugewandten Kanten des zweiten Flügels sich an einer den Bremszylinder begrenzenden radialen Wand abstützen können. Der zweite Flügel kann dabei so ausgestaltet sein, daß er sich nur punktförmig in radialer Richtung am Bremsengehäuse abstützt und somit aufgrund seiner verbesserten Gleitfähigkeit in tangentialer Richtung die Schwenkbewegung des ersten Flügels unterstützt. Es besteht aber auch die Möglichkeit, die Form des zweiten Flügels an die beispielsweise ringsektorförmige Fläche des Bremsengehäuses anzupassen, um so eine stabilere Anlage zu erhalten.

Eine besonders einfache und preiswerte Ausgestaltung der erfindungsgemäßen Feder erhält man dadurch, daß diese als Drahtfeder ausgebildet ist. Hierdurch ist es möglich, die Flügel als Drahtschleifen auszubilden. Neben der Gewichtsersparnis ergibt sich der Vorteil, daß die beispielsweise als Drahtschleifen ausgebildeten zweiten Flügel Betätigungsösen ergeben, in welche, wie bei einer Schere, mit zwei Fingern eingegriffen und die V-förmigen Schenkel zum Einbau der Feder zueinander parallel geschwenkt werden können. Durch diese Schwenkbewegung der Schenkel verringert sich der Abstand der beiden in axialer Richtung verlaufenden Kanten derart, daß sie in die hinterschnittene Öffnung im Bremsengehäuse eingesetzt werden können. Nach dem Loslassen der Schenkel legen sich die Flügel mit Vorspannung gegen die Gehäusewände, so daß die Feder selbsthaltend in der Öffnung und damit im Bremsengehäuse verbleibt.

Dabei ist es besonders zweckmäßig, die ersten Flügel im wesentlichen als viereckige Drahtschleife auszugestalten, da man hier geradlinig verlaufende Kanten zur Anlage im Bremsengehäuse (axiale und radiale Richtung) und als Führung für die Bremsbacken erhält.

Zur Erhöhung der Federwirkung empfiehlt sich eine Merkmalskombination nach Anspruch 5, da hierdurch sichergestellt wird, daß auch die beiden in axialer Richtung verlaufenden Drahtabschnitte sich gegeneinander verschwenken und damit die Federwirkung erhöhen können. Auf diese Weise werden die Flügel in sich elastisch. Dabei kann es genügen, daß die Drahtschleife nur über drei Seiten mit Drahtabschnitten besetzt ist. Gegebenenfalls kann der vierte Abschnitt durch eine entsprechende Verbiegung zusätzlich zur radialen Abstützung der Feder verwendet werden.

Eine Verbesserung der Federwirkung beim Schwenken der Schenkel gegeneinander läßt sich durch eine in Anspruch 6 aufgeführte Merkmalskombination erreichen, da hier die Federbelastung über eine größere Drahtlänge verteilt wird.

Besonders zweckmäßig hierfür ist es, eine in Anspruch 7 geschilderte Ausgestaltung zu wählen, da hier die Bewegungskräfte der Schenkel besonders gleichmäßig verteilt werden und gleichzeitig die gerundete Form des Federendes das Einfädeln dieses Endes in eine Öffnung erleichtert.

In einer einfachen Ausgestaltung ist zwischen den beiden Funktionsbereichen ein Zwischenteil vorgesehen, das in Sekantenrichtung (Umfangsrichtung) abgestützt ist. Damit ist die Feder mit dem Zwischenteil am Bremsengehäuse festgelegt, so daß die Bewegungen der Bremsbacken nur auf den ihnen zugeordneten Funktionsbereichen der Feder einwirken und keinen Einfluß aufeinander haben. Gleichzeitig ist die Niederhaltefeder im Bremsengehäuse verspannt.

Ist das Zwischenteil gemäß Anspruch 10 in beiden Sekantenrichtungen festgelegt, so ergibt sich für das Zwischenteil und die gesamte Feder eine sichere Befestigung.

In einer einfachen Ausführungsform gemäß Anspruch 11 endet der äußere Funktionsbereich für die äußere Bremsbacke in einem zur Radachse geneigt verlaufenden freien Ende. Damit ist die äußere Bremsbacke sicher an dem äußeren Gehäuseschenkel festgelegt.

In vorteilhafter Weise erstreckt sich der innere Funktionsbereich mit einem zur Radachse geneigt verlaufenden Schenkel von der der Bremsscheibe zugewandten Betätigungsgehäusewand bis über die Bremsscheibe. Durch die Neigung ist sichergestellt, daß die Bremsbacke von der Bremsscheibe abklappt und eine leichte Relativbewegung zurück auf den Bremskolben ermöglicht ist. Des weiteren ist durch die axiale Erstreckung eine Relativbewegung bei Bremsbelagabnutzung berücksichtigt.

In einfacher Weise ist die Niederhaltefeder symmetrisch ausgebildet, so daß insgesamt zwei Funktionsbereiche für die äußere Bremsbacke und zwei Funktionsbereiche für die innere Bremsbacke vorgesehen sind. Somit ergeben sich mit in Umfangsrichtung beabstandeten Funktionsbereichen gleiche Federkräfte an in Umfangsrichtung außen liegenden Bereichen auf den Bremsbacken.

Mit in Umfangsrichtung auf gleicher Höhe angeordneten freiem Ende und Schenkel können innere und äußere Bremsbacken identisch ausgebildet sein, so daß sich für eine einfache Lagerhaltung gleiche Bremsbacken sowohl für die innere als auch für die äußere Seite vorgesehen sind.

In einer einfachen Ausführungsform gemäß Anspruch 14 ist die Niederhaltefeder mit einer Schlaufe versehen, die einen Schacht des Bremsengehäuses durchragt und sich radial von außen auf der äußeren Gehäusewand des Bremsengehäuses abstützt, so daß eine radiale Sicherung gegeben ist.

In einer weiteren einfachen Ausführungsform ist eine Lagesicherung der Niederhaltefeder durch eine axiale Vorspannkraft gegeben, so daß die Niederhaltefeder zwischen der äußeren und der inneren Gehäusewand des äußeren und des inneren Schenkels (Gehäuseschenkel und Betätigungsschenkel) verklemmbar ist.

Ist die Feder gemäß Anspruch 16 aus einem Stück, so ergibt sich ein fester Sitz im Bremsengehäuse und nicht an der Trägerplatte. Die Feder ist einfach zu handhaben und ermöglicht einen guten Toleranzausgleich.

In einer weiteren Ausführungsform gemäß Anspruch 17 ist die Niederhaltefeder an der Bremsbacke derart gelagert, daß bei einer Schwenkbewegung die Bremsbacke gegenüber der Feder reibschlüssig geführt ist. Damit sind reibschlüssige Flächen an der Bremsbacke bzw. der Feder vorgesehen, die aneinanderreiben und nach einem radialen Ausheben der Bremsbacke das Zurückfallen bzw. ein Aufsetzen der Bremsbacke auf den Trägerarm dämpfen. Davon ist insbesondere die innere Bremsbacke betroffen, die nicht wie die äußere Bremsbacke am Bremsengehäuse geführt ist.

In einfacher Weise ist die Feder gemäß Anspruch 18 als Zentralfeder mit einem Zentralabschnitt ausgebildet, mit dem die Feder in einem Schacht des Bremsengehäuses gehalten ist. Damit ist die Feder an einem Ort plaziert, von dem aus die Feder mittig und auf beide Bremsbacken einwirken kann.

Wenn die Feder gemäß Anspruch 19 einen sich im wesentlichen in Umfangsrichtung erstreckenden Schenkel aufweist, so ist eine weiche, flache Kraftkennlinie der Feder für die radiale Richtung erzielbar. Damit ist die Federkraft durch Reibung vernichtbar.

In vorteilhafter Weise ist der Federschenkel mit einem S-förmigen Abschnitt versehen, so daß der Federschenkel in Umfangsrichtung federnd nachgibt, um ein Belagklacken zu vermeiden oder um einen Längenausgleich zu gewährleisten.

In vorteilhafter Weise sind die Federn und die Bremsbacke mit zylinderförmigen Oberflächen versehen, die eine Relativbewegung, die als Rotationsbewegung erfolgt, zwischen beiden reibschlüssig zu dämpfen.

In einer einfachen Ausgestaltung weist die Feder eine äußere zylinderförmige Fläche auf, die an der Bremsbacke anliegt.

Die äußere Zylinderfläche ist durch Biegen der Feder einfach herstellbar.

Eine innere zylinderförmige Fläche an der Bremsbacke ist vorteilhaft durch einfaches Herausstanzen von Material an der Trägerplatte bzw. durch einfaches Aufsetzen von Material auf die Trägerplatte herstellbar.

Die Trägerplattenansätze der Bremsbacken weisen zwei sich in entgegengesetzte Umfangsrichtungen erstreckende Vorsprünge auf, die von den Federschenkelenden zangenförmig umfaßt werden. Das hat den Vorteil, daß bei einer Demontage des Bremssattels die Feder die Bremsbacken zangenförmig umklammert und das Bremsengehäuse mit der Feder und den Bremsbacken von dem integrierten Achsschenkel entfernbar ist.

Mit einer radial nach außen gerichteten Krümmung des Federschenkels wird der sich in Umfangsrichtung erstreckende Vorsprung vorteilhaft bei der Rotationsbewegung freigehalten, ehe dieser formschlüssig in die Rotationsbewegung eingreift.

In einfacher Weise ist die Feder gemäß Anspruch 27 symmetrisch zu einer Symmetrieachse der Teilbelag-Scheibenbremse aufgebaut, so daß die Feder bei eintretender Bremsung sowohl bei Vorwärtsfahrt als auch bei Rückwärtsfahrt das Belagklacken vermeidet.

In einer weiteren vorteilhaften Ausgestaltung der Erfindung ist die Feder symmetrisch zu einer parallel versetzt zu der Bremsscheibe liegenden Radialebenen aufgebaut, so daß die Feder vorteilhaft unter einem Winkel von 0° bzw. unter einem Winkel von 180° gedreht einsetzbar ist. Damit ist eine einfache Montage ermöglicht.

In einer anderen vorteilhaften Ausgestaltung gemäß Anspruch 29 ist die Feder asymmetrisch ausgebildet, so daß die sich relativ zum Bremsengehäuse bewegende innere Bremsbacke und die sich nicht bewegende äußere Bremsbacke berücksichtigt ist.

Wenn der mittlere Abschnitt gemäß Anspruch 30 eine Schlaufe aufweist, so ist er vorteilhaft in Umfangsrichtung zusammenpreßbar, und die Feder ist in den Schacht des Faustsattels einklipsbar. Gleichzeitig dient die Schlaufe zum Toleranzausgleich für eine einfache Montage.

In vorteilhafter Weise ist das Schenkelende des Federschenkels zusammengerollt, und so gegen einen Anschlag federnd anlegbar. In einer Weiterbildung der Erfindung gemäß Anspruch 32 ist der Federschenkelteil hinter einem Ansatz einer Bremsbacke einrastbar. Werden Bremsträger und Achsschenkel einteilig als integrierte Achsschenkel ausgeführt, so wird nach einer Bandmontage die Bremsscheibe unter sich radial erstreckende Achsschenkelarme auf die Achse montiert, dann die Bremsbacken radial auf die Bremsträgerarme und danach das Bremsengehäuse mit der Feder über die Bremsscheibe und die Bremsbacken aufgesetzt. Dabei gleiten die Federschenkelteile über eine sich im wesentlichen in Sekantenrichtung erstreckende Umfangsfläche und die Federschenkel werden gespreizt, ehe die Schenkelteile hinter den Trägerplattenansätzen der Bremsbacken lösbar einrasten und gegen den Trägerplattenansatz der Bremsbacke anschlagen. Damit ist bei allen Betriebsbedingungen ein Belagklacken, d.h. bei einsetzender Bremsung das Anschlagen der Bremsbacken an den Bremsträger in Umfangsrichtung, vermieden.

Ausführungsbeispiele der Erfindung werden nachfolgend anhand der Zeichnungen dargestellt.

Darin zeigen
- Fig. 1: eine erste Ausführungsform der erfindungsgemäßen Niederhaltefeder in Draufsicht im gespannten Zustand,
- Fig. 2: eine Seitenansicht der Feder nach Fig. 1,
- Fig. 3: eine längs der Linie A-A geschnittene Ansicht der Feder,
- Fig. 4: eine abgewandelte Ausführungsform der Feder nach Fig. 1 in ausgebautem Zustand,
- Fig. 5: in perspektivischer und teilweise geschnittener Darstellung den Einbau der Feder in das Bremsengehäuse einer Schwimmsattelbremse,
- Fig. 6: in teilweise geschnittener Darstellung die Ansicht eines Schwimmsattels mit Blickrichtung von außen in Richtung Bremskolben mit eingebauter Feder,
- Fig. 7: eine Teilbelag-Scheibenbremse mit einer anderen Niederhaltefeder in teilweise geschnittener Seitenansicht,
- Fig. 8: die Teilbelag-Scheibenbremse in einer teilweise geschnittenen Vorderansicht,
- Fig. 9: ein Bremsengehäuse mit einer zweiten Feder,
- Fig. 10: das Bremsengehäuse mit der Feder in Schnittdarstellung entlang der Linie X-X aus Fig. 9,
- Fig. 11: eine dritte Niederhaltefeder,
- Fig. 12: die Niederhaltefeder eingesetzt in einem Bremsengehäuse,
- Fig. 13: die Niederhaltefeder geschnitten entlang der Linie XIII-XIII aus Fig. 12,
- Fig. 14: eine weitere Zentralfeder in Draufsicht,
- Fig. 15: die Niederhaltefeder in Seitenansicht in Schnittdarstellung entlang der Linie XV-XV gemäß Fig. 14,
- Fig. 16: eine Bremsbacke,
- Fig. 17: eine Nut für die Niederhaltefeder in einer Trägerplatte der Bremsbacke,
- Fig. 18: eine weitere Ausgestaltung der Nut,
- Fig. 19: eine Teilbelag-Scheibenbremse mit einer weiteren Niederhaltefeder in teilweise geschnittener Seitenansicht,
- Fig. 20: die Teilbelag-Scheibenbremse in einer weiteren teilweise geschnittenen Vorderansicht,
- Fig. 21: die Teilbelag-Scheibenbremse mit der Feder in Draufsicht,
- Fig. 22: einen Schenkel der Feder
- Fig. 23: eine weitere Feder in der Teilbelag-Scheibenbremse in Vorderansicht,
- Fig. 24: die Feder in Draufsicht,
- Fig. 25: eine Drahtfeder
- Fig. 26: einen Schenkel der Drahtfeder an der Trägerplatte,
- Fig. 27: eine zweite Drahtfeder in Draufsicht,
- Fig. 28: die Drahtfeder in Seitenansicht,
- Fig. 29: ein gerolltes Federschenkelteil an der Trägerplatte in Seitenansicht und
- Fig. 30: eine vorgespannte Blechfeder an den Trägerplatten in Draufsicht.

In den Figuren sind gleiche bzw. einander entsprechende Bauteile der Übersichtlickeit wegen mit gleichen Bezugszeichen versehen.

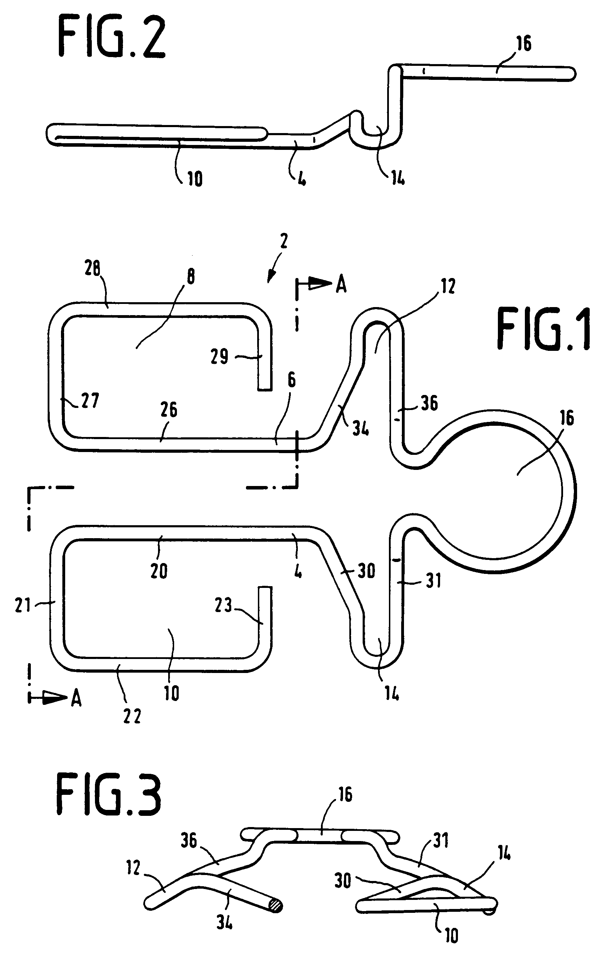

In Fig. 1 erkennt man die erfindungsgemäße Niederhaltefeder 2, welche zwei Schenkel 4 und 6 besitzt. Die beiden Schenkel 4, 6 laufen zusammen zu einer durch eine kreisförmige Drahtschleife gebildeten Stoßstelle 16.

Aus den Schenkeln 4 und 6 sind jeweils ein erster Flügel 8 bzw. 10 sowie ein zweiter Flügel 12 bzw. 14 herausgeformt.

Wie aus Fig. 2 und 3 zu erkennen, ist der Flügel 10 von der Außenkante zur Mittelachse der Feder hin geneigt. Die Neigung kann durchaus stärker sein als in der Zeichnung angegeben und bestimmt mit das elastische Verhalten der Feder gegenüber einer radialen Belastung an der Innenseite der Flügel 8, 10. Entsprechendes wie für den Flügel 10 gilt auch für den Flügel 8.

Beide Flügel 8, 10 sind als im wesentlichen viereckige Drahtschleifen ausgestaltet. Die erfindungsgemäße Feder kann aber auch als Bandfeder aufgebaut sein, wobei die jeweiligen Flügel an die Schenkel angeformt oder an diesen befestigt sind. Eine derartige Blattfeder, die auch einstückig sein kann, liegt im Rahmen der vorliegenden Erfindung.

Die im wesentlichen viereckige Drahtschleife setzt sich aus den Drahtabschnitten 20 bis 23 zusammen, welche paarweise zueinander parallel liegen. Entsprechendes gilt für die Drahtabschnitte 26 bis 29 des Flügels 8.

Die viereckige Drahtschleife 10 ist, wie aus dem Drahtabschnitt 23 zu erkennen, nicht ganz geschlossen. Hierdurch wird eine vergrößerte Federwirkung der beiden Drahtabschnitte 22 und 20 erreicht, welche federnd in einem Winkel zueinander ausgelenkt werden können. Entsprechendes gilt für den Flügel 8.

Die zweiten Flügel 12 und 14 sind jeweils durch zwei im wesentlichen im Winkel zueinander stehende Drahtabschnitte gebildet. Die Winkelstellung dieser Drahtabschnitte 30,31 bzw. 34,36 schafft eine höhere Elastizität der Feder in axialer Richtung, also eine leichtere Verschiebbarkeit der Drahtabschnitte 21,31 bzw. 27,36 gegeneinander, so daß hier leichter Toleranzen innerhalb des Bremsengehäuses 40 ausgeglichen werden können.

Wie aus Fig. 3 ersichtlich, ist darüberhinaus noch der Drahtabschnitt 30 in sich gebogen, was auch für den Drahtabschnitt 34 gilt. Hierdurch wird eine Anpassung der Oberfläche dieser Drahtabschnitte 30, 34 an die Form des Bremsengehäuses 40 erreicht, um eine verbesserte Auflage zu erhalten sowie den Freigang der Kolbenschutzkappe zu gewährleisten. Die Flügel 12,14 können aber auch derart geformt sein, daß sie nur mit ihren Endpunkten sich am Bremsengehäuse 40 abstützen und damit die Elastizität der Feder in radialer Richtung erhöhen.

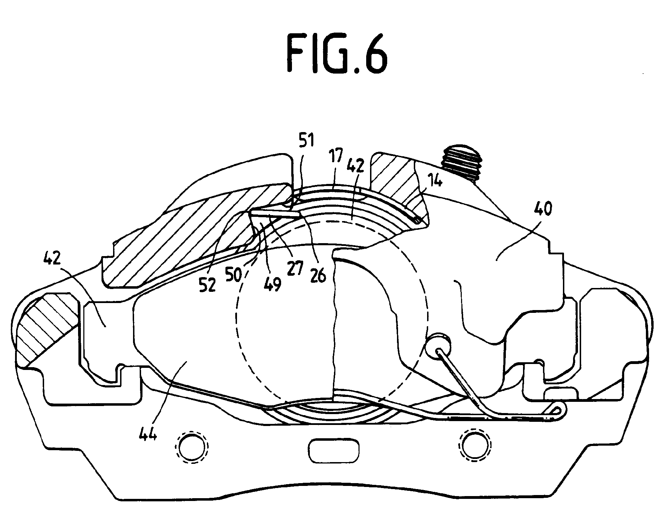

Wie aus Fig. 1 im Vergleich mit Fig. 2 und 3 ersichtlich, ist die Stoßstelle 16 gegenüber der Höhe der Schenkel 4,6 versetzt, so daß sich über die Drahtabschnitte 31,36 eine Anlagefläche an dem Bremsengehäuse 40 ergibt, wodurch sich die Feder in axialer Richtung, also insbesondere in Richtung zur Stoßstelle 16 hin, abstützen kann. Der Niveauunterschied zwischen den Schenkeln 4,6 und der Stoßstelle 16 liegt weiterhin darin begründet, daß die Flügel 8,10 sich in radialer Richtung an der Gehäuseinnenfläche abstützen, während die Stoßstelle 16 auf dem Bremsengehäuse 40 aufliegt. Nähere Einzelheiten hierzu s. Fig. 5. Dabei liegt die Stoßstelle 16 nur bei geöffnetem Bremsengehäuse 40 auf. Wird die Feder durch die Bremsbacken 43, 44 belastet, hebt die Stoßstelle 16 ab und die Übertragung der Kräfte erfolgt über die Schenkel 12 und 14 (sowie auch über 8 und 10).

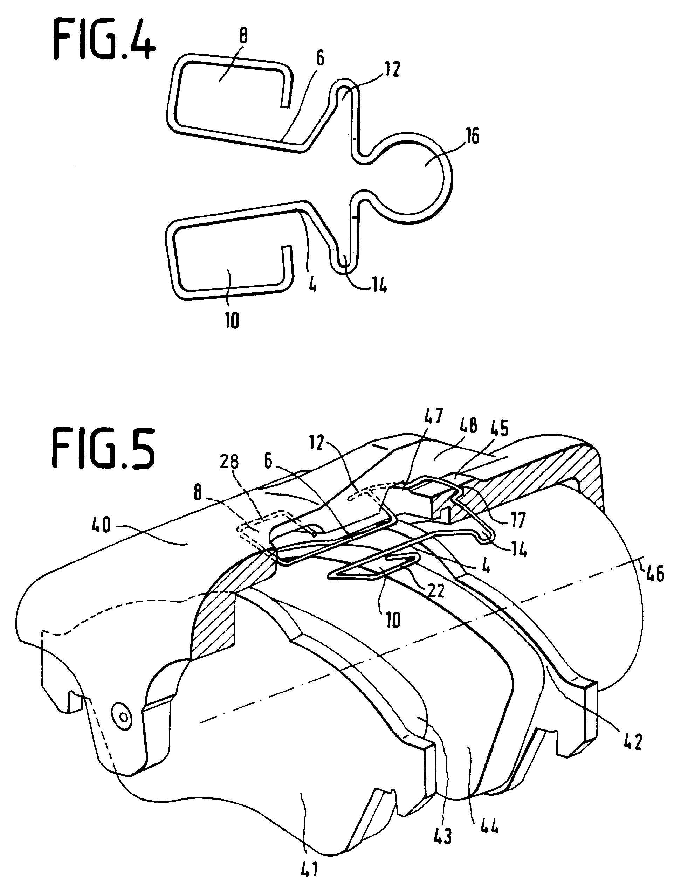

Fig. 4 zeigt die erfindungsgemäße Feder im ausgebauten Zustand, also vor dem Einsetzen in das Bremsengehäuse. In diesem Zustand sind die beiden Schenkel 4,6 gegeneinander mit ihren Enden winkelförmig verschwenkt. Zum Einbau der Feder werden die beiden innen offenen Flügel 8 und 10 ergriffen und so weit zueinander geschwenkt, bis der Abstand der Drahtabschnitte 22,28 (s. Fig. 1) ausreicht, die Feder in eine hinterschnittene Öffnung in dem Bremsengehäuse 40 einzusetzen. Danach schwenken die beiden Schenkel 4,6 wieder auseinander, bis die Drahtabschnitt 22,28 an entsprechenden Führungsflächen in dem Bremsengehäuse 40 anliegen, wodurch sich die Feder selbst im Bremsengehäuse 40 hält. In dieser Lage verlaufen die beiden Schenkel 4,6 in etwa parallel.

Fig. 5 zeigt eine geringfügig modifizierte Niederhaltefeder im eingebauten Zustand eines Bremsengehäuses 40. Dabei handelt es sich um einen Schwimmsattel, wobei die Feder nur die direkt betätigte Bremsbacke 44 abstützt. Selbstverständlich kann die Erfindung auch mit Erfolg sowohl bei Festsattelbremsen angewendet werden als auch beide Bremsbacken 43,44 abstützen, indem sie an den zugehörigen Rückenplatten 41,42 angreift. Wie aus Fig. 5 zu erkennen, liegen die Schenkel 4,6 an der Kante der Rückenplatte 42 an und stützen diese in radialer Richtung ab. Die Feder ist nun derart geformt, daß sie durch eine leichte Neigung gegenüber der Achse 46 zusätzlich noch eine in axialer Richtung gerichtete Kraft auf die Rückenplatte 41 ausüben, um sie weg von der Bremsscheibe zum Bremskolben hin zu drücken.

Die Feder liegt mit den äußeren Drahtabschnitten 28,22 ihrer Flügel 8 und 10 an den Wänden nicht gezeichneter Öffnungen in dem gebrochen dargestellten Bremsengehäuse 40 an. Wichtig ist die V-förmige Neigung der Flügel 8 und 10 zueinander, die die Elastizität der Feder in radialer Richtung stark bestimmt. Die federnde Wirkung verstärkt weiterhin die schon im Zusammenhang mit den Fig. 1 bis 3 beschriebene Öffnung der Drahtschleifen 8 und 10, wobei die Drahtabschnitte 23 und 29 noch zum Bremsengehäuse 40 hin nach oben abgebogen sein können, um die Federwirkung in radialer Richtung zu verstärken. Die Flügel 12 und 14 stützen sich in radialer Richtung am Bremsengehäuse 40 ab, wobei die Drahtabschnitte 36 und 31 sich gegen eine Ringfläche 47 in axialer Richtung legen. Da weiterhin auch die Drahtabschnitt 21,27 (s. Fig. 1) sich an entsprechenden Wänden der hinterschnittenen Öffnung in axialer Richtung abstützen, ist somit die Bewegung der Feder in beiden axialen Richtungen behindert, so daß auch eine axiale Bewegung der Bremsbacke 44 die Feder nicht verschieben kann.

Geändert gegenüber den Fig. 1 bis 4 ist die erfindungsgemäße Niederhaltefeder hinsichtlich der Stoßstelle 17 der beiden Schenkel 4 und 6, die in Fig. 5 im wesentlichen rechteckförmig ausgestaltet ist. Hierdurch soll eine verbesserte Auflage auf dem Boden 45 einer seitliche Wände 48 aufweisenden Öffnung erreicht werden. Diese Öffnung ist in axialer Richtung und auch nach oben in radialer Richtung hin offen, so daß der Boden 45 als äußere Oberfläche des Bremsengehäuses 40 betrachtet werden muß. Abgesehen von vermindertem Gewicht und gußtechnischen Vereinfachungen hat die nach oben offene Öffnung den Vorteil, daß die Stoßstelle 17 nach oben in radialer Richtung ausweichen kann und damit die Elastizität der Feder in dieser Richtung verstärkt.

Fig. 6 zeigt eine teilweise geschnittene und aufgebrochene Darstellung einer Schwimmsattelbremse von außen in Richtung Bremskolben gesehen. Für die Erfindung wesentlich ist dabei die hinterschnittene Ausnehmung 49 mit ihren beiden V-förmig zueinander geneigten Wänden 50,51, die in der Schnittkante 52 aufeinanderstoßen. Gegen diese Schnittkante 52 legt sich der äußere Drahtabschnitt 28 (s. Fig. 1) der Feder. Bei einer radialen Bewegung der Bremsbacke 44 schwenkt somit der Flügel 8 um die Schnittkante 52 nach oben, wobei der Flügel 12 die Bewegung der Bremsbacke 44 abfedert.

In Fig. 6 ist die Kontur der Rückenplatte 42 zu sehen. Vorteilhafterweise ist zumindest die kolbenseitige Rückenplatte 42 so ausgeführt, daß eine Erhebung im Bereich der Feder (hier halbmondförmig) diese radial in Höhe des Außendurchmessers einer Kolbenschutzkappe abstützt, um den Hub der Kolbenschutzkappe bei Belagverschleiß ungehindert zu gewährleisten.

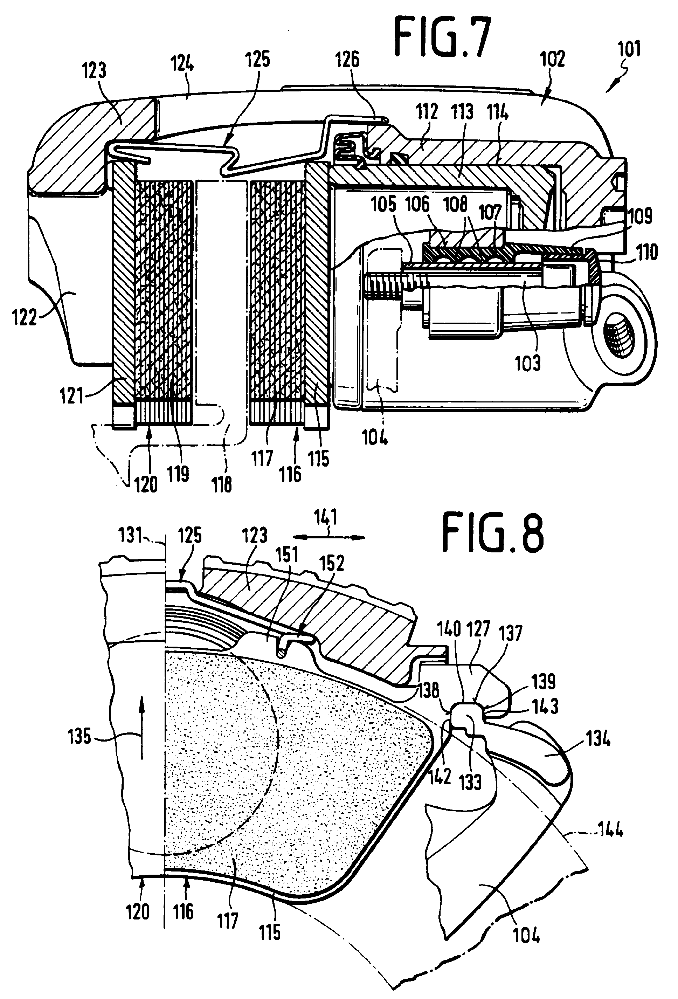

Fig. 7 und 8 zeigen eine Teilbelag-Scheibenbremse 101 mit einem U-förmigen Bremsengehäuse 102. Ein Bolzen 103 ist in einem Bremsträger 104 verschraubt und von einer Schutzhülse 105 ummantelt, die durch den Bolzen 103 axial am Bremsträger 104 festgelegt ist. Der Bolzen 103 und die Schutzhülse 105 erstrecken sich durch eine Führungsbohrung 106 des Bremsengehäuses 102. Eine elastische Führungs- und Dämpfungshülse 107 ummantelt die Schutzhülse 105 und zentriert mit Hilfe ihrer Rippen 108 den Bolzen 103 mittig in der Führungsbohrung 106 des Bremsengehäuses 102. Ein axialer Fortsatz 109 der Dämpfungshülse 107 dient zur Aufnahme einer Schutzkappe 110. Das Bremsengehäuse 102 ist über zwei identisch aufgebaute Führungen aus dem Bolzen 103, der Schutzhülse 105 und den Dämpfungshülsen 107 symmetrisch an dem Bremsträger 104 gelagert. In einem Betätigungsgehäuse 112 des Bremsengehäuses 102 ist ein Bremskolben 113 einer Betätigungseinrichtung in einem Bremszylinder 114 verschiebbar gelagert. Der Bremskolben 113 drückt direkt gegen eine Trägerplatte 115 einer Bremsbacke 116, die somit mit einem Reibbelag 117 gegen eine erste Seite einer Bremsscheibe 118 angelegt wird. Über die Reaktionskraft des Bremsengehäuses 102 wird ein Reibbelag 119 einer zweiten Bremsbacke 120 gegen die andere Seite der Bremsscheibe 118 gedrückt. Dabei legt sich ein äußerer Schenkel 122 gegen eine Trägerplatte 121 der Bremsbacke 120. Das Bremsengehäuse 102 besteht im wesentlichen aus dem äußeren Schenkel 122, einem Brückenabschnitt 123 und dem Betätigungsgehäuse 112. Ein Schacht 124 im Brückenabschnitt 123 nimmt eine Niederhaltefeder 125 auf. Eine Schlaufe 126 der Niederhaltefeder 125 liegt an der radial äußeren Seite auf dem Betätigungsgehäuse 112 auf. Beide Bremsbacken 116,120 weisen tangentiale Bremsbackenenden 127 auf, die wegen der Symmetrie der Bremsbacken 116, 120 zu einer Symmetrieachse 131 spiegelbildlich zueinander ausgebildet sind. Die Bremsbackenenden 127 der äußeren und der inneren Bremsbacke 116,120 liegen auf einem radial nach außen ragenden Ansatz 133 eines ersten Bremsträgerarmes 134 auf. Wegen der Symmetrie der Teilbelag-Scheibenbremse 101 zu der Symmetrieachse 131 wird nur der in der Zeichnung rechts dargestellte Teil mit dem Bremsbackenende 127 und dem Bremsträgerarm 134 näher erläutert. Der Ansatz 133 erstreckt sich axial parallel zur Kolbenachse und über eine solche Länge, daß die sich gegenüberliegenden Bremsbackenenden 127 sowohl der äußeren als auch der inneren Bremsbacke 116,120 auf demselben Ansatz 133 aufliegen. Die Anordnung der Bremsbacke 116 bezüglich der Anlagen- und Führungsflächen ist im Hinblick auf die in Umfangsrichtung beabstandeten Bremsbackenenden die gleiche, so daß sich die nachfolgende Beschreibung auf den radialen Vorsprung 133 und das Bremsbackenende 127 beschränken kann, da die Beschreibung in gleicher Weise auf den in Umfangsrichtung gegenüberliegenden spiegelbildlich zur Symmetrieachse angeordneten Ansatz 133 auch zutrifft. Das Bremsbackenende 127 weist eine radial nach innen gerichtete Nut 137 auf, die in Umfangsrichtung von Nutflächen 138,139 und radial nach oben von einer Basisfläche 140 begrenzt ist. Die Basisfläche 140 liegt auf dem radialen Ansatz 133 des Bremsträgerarmes 134 auf. Die Nutflächen 138,139 treten bei Bremsbetätigung mit in Sekantenrichtung 141 gerichteten bzw. sich in radialer Richtung 135 erstreckenden Ansatzflächen 142,143 des radialen Ansatzes 133 in Berührung, und zwar so, daß ein Pull/Push (Ziehen/Drücken)-Betrieb gewährleistet ist, d.h. daß die Spiele in der Nut 137 zwischen dem Ansatz 133 so bemessen sind, daß die Bremsbacke 116 zunächst auf der Einlaufseite und danach auf der Auslaufseite mit dem Bremsträgerarm 134 in Berührung tritt, so daß die Bremsbacke 116 zunächst gezogen und dann gedrückt wird, um vorteilhaft gleichmäßigen Reibbelagverschleiß zu gewährleisten. Der Bremsträger 104 ist einteilig mit dem Achsschenkel ausgeführt und wird als integrierter Achsschenkel bezeichnet. Die Bremsträgerarme 134 erstrecken sich axial über die Bremsscheibe 118 und liegen radial außerhalb des Bremsscheibenumfanges 144.

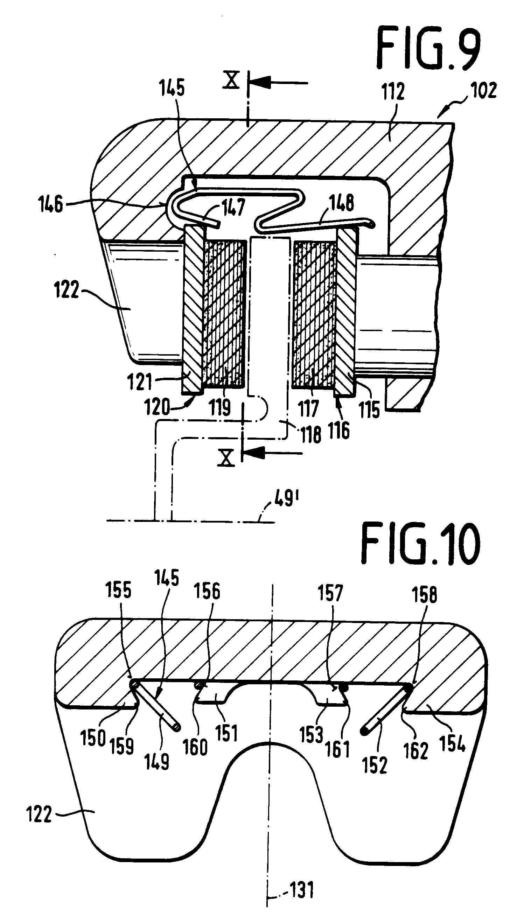

Fig. 9,10 zeigen eine Niederhaltefeder 145, die zwischen dem sich als radiale Wand erstreckenden Schenkel 122 und dem sich als radiale Wand erstreckenden Betätigungsgehäuse 112 eingesetzt ist. Eine Hinterschneidung 146 dient zum Einrasten der Feder und als Toleranz- und/oder Längenausgleich. Die Funktionsbereichsschleifen 147,148 für die äußere Bremsbacke 120 und für die innere Bremsbacke 116 sind gegenüber einer Radachse 49′ geneigt ausgeführt, so daß sich ein Rampeneffekt mit dem Ziel ergibt, die Bremsbacken 116, 120 von der Bremsscheibe 118 wegzudrücken. Dabei ist die äußere Funktionsbereichsschleife 147 stärker geneigt. Fig. 10 zeigt den äußeren Schenkel 122 mit der Niederhaltefeder 145 ohne die Bremsbacke 120. Dabei ist die Niederhaltefeder 145 symmetrisch zu der Symmetrieachse 131 ausgeführt und liegt mit ihrer ersten Federschenkelhälfte 149 zwischen zwei Vorsprüngen 150,151 und mit ihrer zweiten Federschenkelhälfte 152 zwischen zwei Vorsprüngen 153,154 an. Gegen die Vorsprünge 151,153 stützt sie sich axial nach innen zur Symmetrieachse 131 hin zu ab und gegen die Vorsprünge 150,154 in Umfangsrichtung gesehen nach außen ab. Alle Vorsprünge 150,151,153,154 weisen Hinterschneidungen 155,156,157 und 158 auf, die von Spitzen 159,160,161,162 begrenzt sind. Die Spitzen 159,160,161,162 sind bezüglich jeder Federschenkelhälfte 149,152 aufeinander zugerichtet, so daß jede Federschenkelhälfte 149,152 einzeln in den Hinterschneidungen 155,156,157,158 verklemmbar gelagert ist. Der Hinterschnitt dient zur verliersicheren Aufnahme der Feder im Bremsengehäuse 102, wobei die Feder in der Rohkontur sitzt, so daß keine mechanische Bearbeitung erforderlich ist.

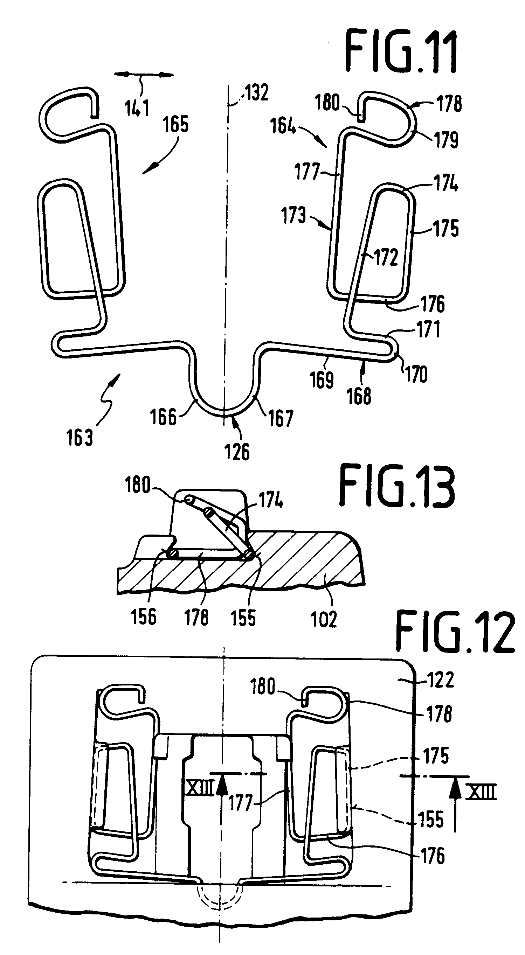

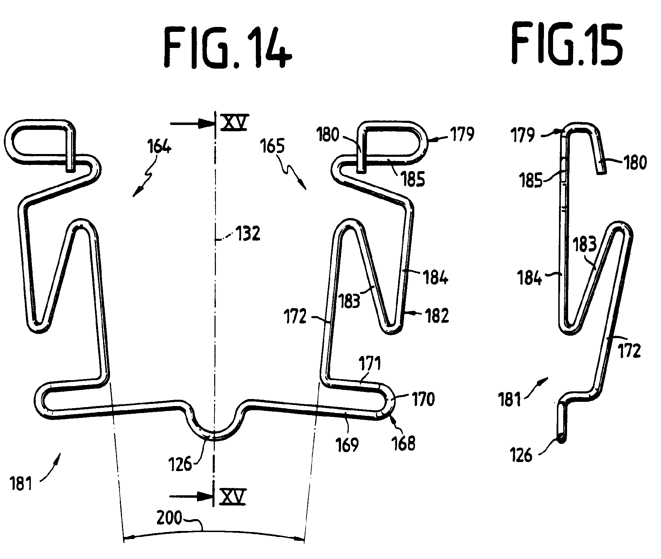

Fig. 11 zeigt eine Niederhaltefeder 163 im entspannten Zustand und Fig. 12 und 13 die Niederhaltefeder 163 eingesetzt in einem Bremsengehäuse 102. Da die Feder symmetrisch zu einer Symmetrieebene mit den Symmetrieachsen 131,132 ausgebildet ist, beschränkt sich die nachfolgende Beschreibung nur auf die in der Fig. 11 dargestellte rechte Federschenkelhälfte 164, da die Beschreibung in gleicher Weise auf die zweite Federschenkelhälfte 165 zutrifft. Die Schlaufe 126 erstreckt sich über die Symmetrieachse 132 und wird somit in zwei Schlaufenhälften 166,167 geteilt. Die Schlaufenhälfte 167 ist ebenso wie ein erster in Sekantenrichtung 141 verlaufender Schenkel 169, ein zweiter in Sekantenrichtung 141 verlaufender Schenkel 171, ein dazwischenliegender U-förmiger, verbindender Bogen 170 und ein Führungsschenkel 172 Teil einer ersten Funktionsbereichsschleife 168. An den Führungsschenkel 172 schließt sich eine rahmenförmige Zwischenstückschleife 173 mit einem in Sekantenrichtung 141 verlaufenden Schenkel 174, ein in Axialrichtung verlaufenden Federbereich 175, ein in Sekantenrichtung 141 verlaufender Federschenkel 176 und ein in axialer Richtung verlaufender Federbereich 177 an. An den Federbereich 177 schließt sich eine zweite Funktionsbereichsschleife 178 mit einem schlaufenförmigen Bogen 179 und einem freien Ende 180 an. Die Federbereiche 175 und 177 sind in Sekantenrichtung 141 federnd zueinander angeordnet und verklemmen federnd in Hinterschneidungen 155,156 des Bremsengehäuses 102. Dabei ist die Hinterschneidung 155 muldenförmig ausgeführt. Der Schenkel 169 liegt in einem kantenförmigen Übergangsbereich zwischen Brückenabschnitt 123 und Betätigungsgehäuse 112 an. Der Bogen 179 verklemmt die Feder axial zwischen dem Betätigungsgehäuse 112 und dem äußeren Schenkel 122. Die Niederhaltefeder 163 ist verliersicher im Bremsengehäuse 102 eingesetzt. Die Niederhaltefeder 163 hat hervorragende Eigenschaften (durch Rampeneffekt), die Bremsbacken 116,120 von der Bremsscheibe 118 wegzubewegen. Die Funktion der faust- und kolbenseitigen Belagbefederung ist trotz der einteiligen Niederhaltefeder 163 sauber getrennt. Die Niederhaltefeder 163 ist aus rostfreiem Stahl leicht herzustellen (z.B. Drahtdurchmesser 1,5 mm). Eine gleiche Geometrie für faust- und kolbenseitige Bremsbacke 116,120 ist möglich.

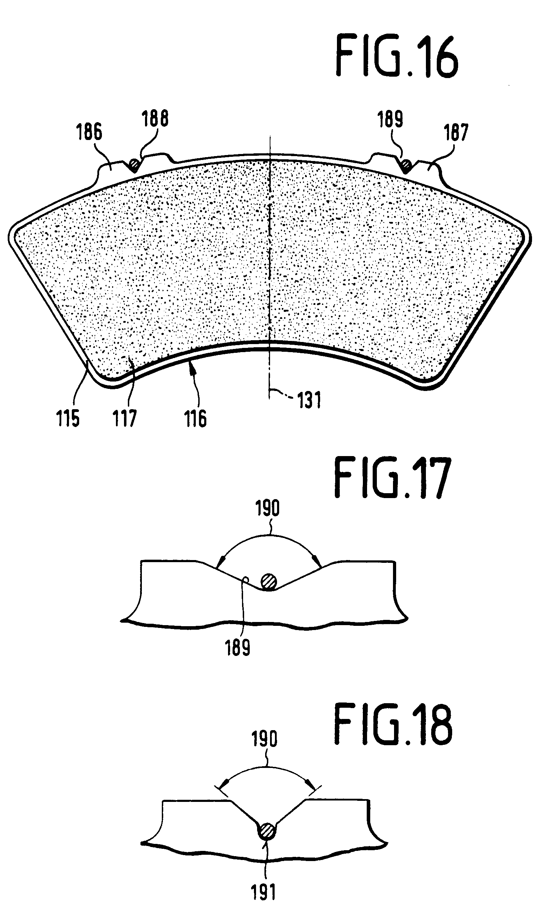

Eine weitere Niederhaltefeder 181 wird in den Fig. 14 und 15 gezeigt. Diese Niederhaltefeder 181 ist einfacher herzustellen, da sie im wesentlichen ohne geschlossene Schlaufen, also nicht rahmenförmig, sondern nur in ungeschlossener Schleifenform ausgeführt ist. Die Zwischenstückschleife 182 zwischen den Funktionsbereichsschleifen 168 und 178 ist V-förmig mit zwei Schenkeln 183,184 und an den Schenkel 184 mit einem U-förmigen Bereich 185 ausgebildet. Die Abstützung in Umfangsrichtung an den Hinterschneidungen erfolgt einerseits an dem Schenkel 184 und andererseits an der Basis des U-förmigen Bereichs 185. Der Führungsschenkel 172 und das freie Ende 180 sind in Umfangsrichtung etwa auf gleicher Höhe angeordnet, so daß die Bremsbacken 116,120 austauschbar sind. Die Federschenkelhälften 164,165 weisen einen Winkel 200 zueinander auf. Der sich am Bremsengehäuse 102 abstützende Bereich 185 liegt in einer Ebene, die senkrecht auf der Zeichenebene steht. Die Schenkel 172,183,184 bilden eine zweite Ebene aus, die schräg zur Zeichenebene verläuft. Die Schleife 168 liegt in einer dritten Ebene. Die beiden Federschenkelhälften 164,165 bilden eine vierte Ebene aus.

Fig. 16 zeigt eine Bremsbacke 116 mit einem Reibbelag 117 und einer Trägerplatte 115. Die Bremsbacke 116 ist symmetrisch zu einer Symmetrieachse 131 und weist radial nach außen zwei in Umfangsrichtung beabstandete Höcker 186,187 auf, von denen jeder mit einer V-förmigen Nut 188,189 versehen ist. In dieser Nut 188,189 rastet die Feder mit ihrem freien Ende 180 bzw. mit dem Führungsschenkel 172 der Funktionsbereichsschleifen 168,178. Damit ist die Klapperfreiheit der Bremsbacken 116,120 gewährleistet.

Fig. 17 zeigt die Nut 189 bogenförmig abgerundet mit einem großen Öffnungswinkel 190. Der große Öffnungswinkel 190 dient zur Erleichterung der Montage.

Fig. 18 zeigt eine V-förmige Nut mit einer in der Spitze des V's gelegenen Ausnehmung 191, wobei die Ausnehmung 191 an den Federdrahtdurchmesser von etwa 1,5 mm angepaßt ist.

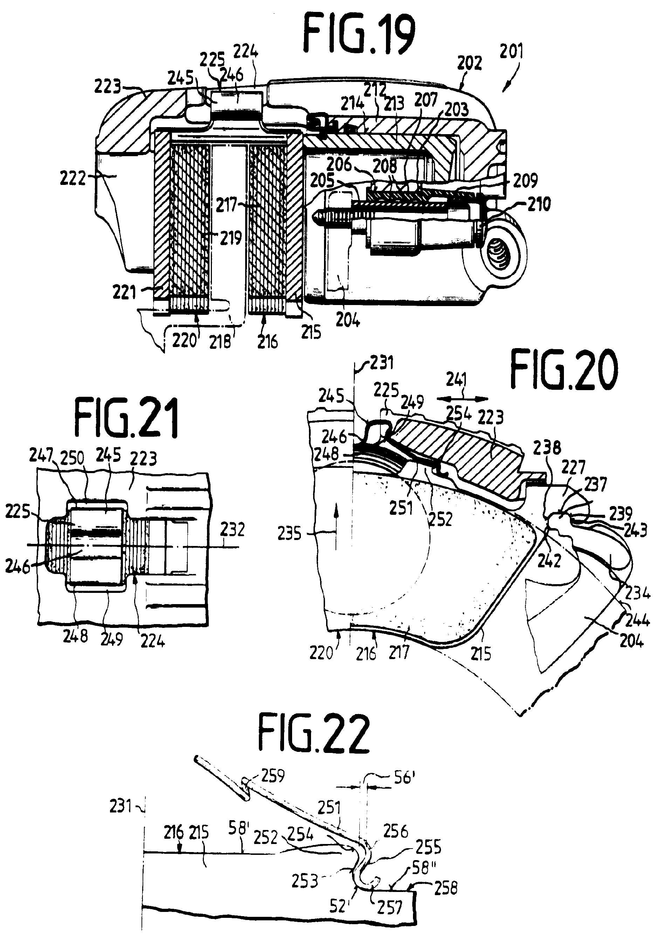

Wegen der Beschreibung zu den Figuren 19 bis 21 wird auf die vorangehende Beschreibung zu den Figuren 7 und 8 verwiesen, wobei lediglich zu allen Bezugszeichen "100" addiert werden muß. Ergänzt wird die Beschreibung zu den Figuren 19 bis 21 durch den nachfolgenden Absatz.

Ein mittlerer Abschnitt 245 der Niederhaltefeder 225 weist eine Schlaufe 246 und zwei Rundungen 247,248 auf, die sich an Schachtvorsprüngen 249,250 anschmiegen. Mit Hilfe der Schlaufe 246 ist die Feder in Sekantenrichtung 241 zusammenpreßbar und radial von unten in den Schacht 224 so einsetzbar, daß die Niederhaltefeder 225 mit Hilfe ihrer Rundungen 247,248 an den Schachtvorsprüngen 249,250 in dem Schacht 224 des Bremsengehäuses 202 verklemmt. Die Niederhaltefeder 225 ist symmetrisch zu der Ebene 231,232 aufgebaut und weist zwei sich im wesentlichen in Sekantenrichtung 241 erstreckende Schenkel 251 auf, von denen hier nur der eine zu sehen ist.

Fig. 22 zeigt den Schenkel 251, der sich über einen sich radial erhebenden Ansatz 252 an der Trägerplatte 215 der Bremsbacke 216 erstreckt. Der Ansatz 252 liegt zwischen der Symmetrieachse 231 und dem Bremsbackenende 227 und weist eine zu dem Bremsbackenende 227 weisende zylinderförmiger Oberfläche 253 auf, über die radial außen ein in Sekantenrichtung 241 zu dem Bremsbackenende 227 erstreckender Vorsprung 254 angeordnet ist. Der Schenkel 251 weist ein S-förmiges Federschenkelteil 255 mit einer oberen Schlaufe 256 und einer unteren Schlaufe 257 auf. Die untere Schlaufe 257 bildet einen zylinderförmigen Abschnitt mit zylinderförmiger Oberfläche 57′, der an einem Fuß 52′ mit der zylinderförmigen Oberfläche 253 des sich radial erhebenden Ansatzes 252 anliegt. Die obere Schlaufe 256 weist dieselbe Kontur wie der Vorsprung 254 der Trägerplatte 215 auf, ist aber mit einem Abstand 56′ von diesem freigehalten. Ein S-förmiger Abschnitt 259 bewirkt eine nachgiebige Federung in Sekantenrichtung 241, um die Bewegung des Reibbelages 216 in Sekantenrichtung 241 zu dämpfen. Der Ansatz 252 definiert zwei Stufenflächen 58′ und 58′′ einer sich im wesentlichen in Sekantenrichtung 241 erstreckenden, radial außen liegenden Umfangsfläche 258. Die radial äußere Stufenfläche 58′ erstreckt sich im wesentlichen in Sekantenrichtung 241 und zumindest soweit zur Symmetrieachse 231, so daß ein sicheres Gleiten und Einsetzen der Feder ermöglicht ist. Damit sind die Trägerplatten 215,221 vorteilhaft so ausgeführt, daß die beiden Schenkel 251 bei der Montage formschlüssig einrasten und im eingefederten Zustand unter allen Betriebsbedingungen das Belagklacken reib- bzw. formschlüssig verhindert ist.

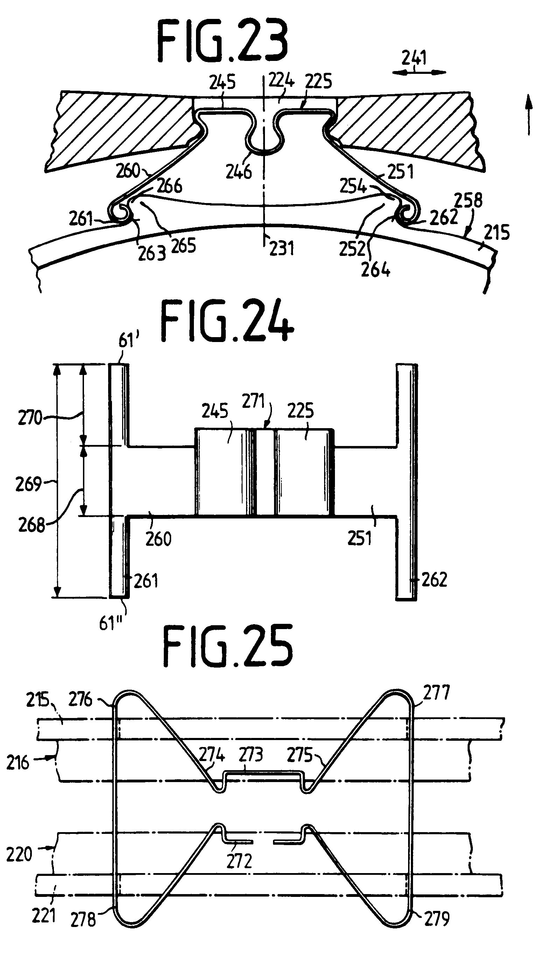

Fig. 23 zeigt die Niederhaltefeder 225, eingesetzt in dem Schacht 224. Mit Hilfe der Schlaufe 246 ist die Feder in ihrem mittleren Abschnitt 245 in Sekantenrichtung 241 zusammenpreßbar, um sie in den Schacht 224 einzusetzen. Die Schenkel 251,260 weisen nach innen gerollte Schenkelenden 261,262 auf, die in sich axial erstreckenden halbkreisförmigen Nuten 263,264, der Trägerplatte 215 eingreifen. Die Nuten 263,264 werden von der radial außen liegenden Oberfläche 253 der Trägerplatte 215 begrenzt und durch sich radial erhebende Ansätze 252,265 gebildet, die mit in Sekantenrichtung 241 erstreckenden Vorsprüngen 254,266 in radialer Richtung ragen.

Fig. 24 zeigt die Niederhaltefeder 225 mit dem mittleren Abschnitt 245 und den Schenkeln 251,260 mit den gerollten Schenkelenden 261,262. Die Schenkel 251,260 sind T-förmig ausgebildet, für die innere Bremsbacke 216 allein würde eine L-Form genügen. Im Bereich des mittleren Abschnittes 245 und der Schenkel 251,260 weist die Niederhaltefeder 225 eine axiale Länge 268 auf, die kleiner ist als eine axiale Länge 269, die von den Schenkelenden 261,262 eingenommen wird. Dabei entsteht ein Freiraum 270, an dem die innere Bremsbacken 216 bei Bremsbelagverschleiß entlangwandern kann. Eine in axialer Richtung hervorspringende Nase gewährleistet den richtigen Einbau der Niederhaltefeder 225. Wegen des Freiraumes 270 ist an den Spitzen 61′,61′′ eine Federwirkung in Sekantenrichtung erzielbar, so daß die Niederhaltefeder 225 mit Vorspannung montierbar ist. Gleichzeitig ist über die Spitze 61′,62˝ eine Torsionswirkung erzielbar, die vorteilhaft das radiale Belagklacken zu vermeiden hilft.

Fig. 25 zeigt eine Niederhaltefeder 272, aufgesetzt auf den Trägerplatten 215,221 der Bremsbacken 216,220. Die Drahtfeder weist einen mittleren Abschnitt 273 auf, von dem aus sich zwei mit ihren Spitzen 274,275 aufeinander gerichtete dreieckförmige Schlaufen 276,277 in Sekantenrichtung 241 erstrecken. Die Schlaufen 276,277 weisen jeweils einen Grundschenkel 278,279 auf, der in den Nuten 263,264 verhakbar bzw. einhängbar ist.

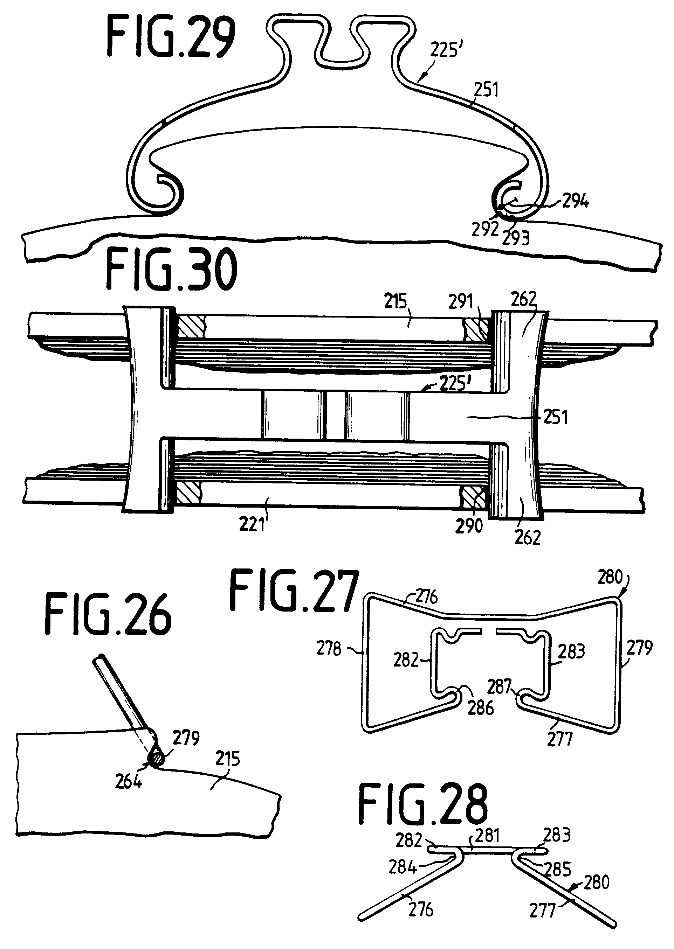

Fig. 26 zeigt das Verhaken des Grundschenkels 279 in der Nut 264 der Trägerplatte 215.

Fig. 27 und 28 zeigen eine Niederhaltefeder 280 mit den beiden Schlaufen 276,277 und den Grundschenkeln 278,279. Die Drahtfeder weist zwischen dem Mittelteil 281 und den Schlaufen 276,277 zwei halbkreisförmige Übergänge 282,283 auf. In diese Übergänge 282,283 greifen die Schachtvorsprünge 249,250 des Bremsengehäuses 202 ein und legen sich an die Oberflächen 284,285 an. Mit Hilfe von halbkreisförmig gebogenen Schlaufen 286,287 im Mittelteil 281 ist das Mittelteil 281 in Sekantenrichtung 241 zusammenpreßbar, so daß die Niederhaltefeder 280 in den Schacht 224 einsetzbar ist.

Fig. 29 zeigt den Schenkel 251 radial nach außen gekrümmt. Die zumindest teilweise zylindrischen Oberflächen 292,293 der Trägerplatte 215 und des Schenkelendes 262 sind koaxial zueinander angeordnet und weisen einen gleichen Radius 294 auf. Beim Ausheben der inneren Bremsbacke 216 werden die zylinderförmigen Oberflächen 292,293 gegeneinander verdreht. Nach Bremsbeendigung müssen die zylinderförmigen Oberflächen 292,293 eine rückläufige Drehbewegung durchführen, wobei die reibschlüssige Anlage die Rückbewegung und damit das Zurückfallen der Bremsbacke 216 auf den Bremsträger 204 dämpft.

Fig. 30 zeigt die Niederhaltefeder 225′ mit ihrem Schenkelende 262 in Sekantenrichtung vorgespannt nur an Kanten 290,291 der Trägerplatten 215,221 anliegend, wobei die Koaxialität nicht mehr gegeben ist.

## Patentansprüche

1. In einem Bremsengehäuse (40, 102, 202) einrastbare Niederhaltefeder (2, 125, 145, 163, 181) für Bremsbacken (44, 116, 120) von Teilbelag-Scheibenbremsen (101, 201), dadurch **gekennzeichnet**, daß die Niederhaltefeder (2, 125, 145, 163, 181) im entspannten Zustand zwei zueinander im Winkel (200) stehende schwenkbare Federschenkelhälften (4, 6, 149, 152, 164, 165) aufweist, und daß zumindest an einer der Federschenkelhälften (4, 6, 149, 152, 164, 165) gegebenenfalls offene Schleifen (147, 148, 168, 173, 178, 182) ausgeformt sind, die zur Schenkelebene geneigte sowie auch gegeneinander geneigte Ebenen aufweisen und die zur Abstützung mindestens einer Bremsbacke (44, 116, 120) gegenüber dem Bremsengehäuse (40, 102, 202) dienen.

2. Niederhaltefeder nach Anspruch 1, dadurch **gekenn****zeichnet**, daß an jedem der Schenkel (4, 6) ein erster Flügel (8, 10) derart angebracht ist, daß das eine Flügelende (22, 28) in eine hinterschnittene Ausnehmung (49) im Bremsengehäuse (40) einrastbar ist, während der gegenüberliegende Drahtabschnitt (20, 26) federnd an der Rückenplatte (42) mindestens einer Bremsbacke (44) abstützbar ist, und daß jeder der Schenkel (4, 6) jeweils einen zweiten Flügel (14, 12) besitzt, der sich im wesentlichen in der Schenkelebene derart erstreckt, daß er sich am Gehäuseinneren abstützend über den ersten Flügel (8, 10) aufgenommene radiale Kräfte an das Bremsengehäuse (40) abzugeben vermag.

3. Niederhaltefeder nach Anspruch 1 oder 2, dadurch **ge****kennzeichnet**, daß sie als Drahtfeder ausgestaltet ist.

4. Niederhaltefeder nach Anspruch 3, dadurch **gekenn****zeichnet**, daß der erste Flügel (8, 10) im wesentlichen als viereckige Drahtschleife (20, 21, 22, 23 bzw. 26, 27, 28, 29) ausgestaltet ist.

5. Niederhaltefeder nach Anspruch 4, dadurch **gekenn****zeichnet**, daß die Drahtschleife (8, 10) zur Verbesserung der Federwirkung nicht geschlossen ist, wobei die Öffnung derart gelegt ist, daß die elastische Seite (22, 28) der Drahtschleife (8, 10) der Anlagefläche am Bremsengehäuse (40) zugewandt ist.

6. Niederhaltefeder nach einem der Ansprüche 3 bis 5, dadurch **gekennzeichnet**, daß zur Verbesserung der Federwirkung bei einer Schwenkbewegung der Schenkel (4, 6) gegeneinander die Stoßstelle (16, 17) der Schenkel (4, 6) als Drahtschleife ausgeführt ist.

7. Niederhaltefeder nach Anspruch 6, dadurch **gekennzeichnet**, daß die Drahtschleife (16) im wesentlichen die Form eines zu den Schenkelenden (4, 6) hin offenen Kreises besitzt.

8. Niederhaltefeder nach Anspruch 1, dadurch **gekenn****zeichnet,** daß die Schleifen (147, 148, 168, 173, 178, 182) der beiden Federschenkelhälften (149, 152, 164, 165) symmetrisch zueinander angeordnet sind.

9. Niederhaltefeder nach Anspruch 8, dadurch **gekennzeichnet**, daß die längs der Federschenkelhälfte (149, 152, 164, 165) aufeinander folgenden Schleifen (147, 148, 168, 173, 178, 182) abwechselnd zur Abstützung am Bremsengehäuse (102) und zur Abstützung an der Bremsbacke (116, 120) dienen.

10. Niederhaltefeder nach einem der Ansprüche 8 oder 9, dadurch **gekennzeichnet**, daß sich die am Bremsengehäuse (102) abstützende Schleife (173) in eine oder beide Sekantenrichtungen (141) abstützt.

11. Niederhaltefeder nach einem der Ansprüche 8 bis 10, dadurch **gekennzeichnet**, daß die äußere Schleife (147, 178) für die äußere Bremsbacke (120) in einem zur Radachse geneigt verlaufenden freien Ende (180) endet.

12. Niederhaltefeder nach einem der Ansprüche 8 bis 11, dadurch **gekennzeichnet**, daß die innere Schleife (148, 168) sich mit einem zur Radachse (49′) geneigt verlaufenden Schenkel (172) von der einer Bremsscheibe (118) zugewandten Wand des Betätigungsgehäuses (112) bis über die Bremsscheibe (118) erstreckt.

13. Niederhaltefeder nach einem der Ansprüche 8 bis 12, dadurch **gekennzeichnet**, daß das freie Ende (180) und der Schenkel (172) in Sekantenrichtung (141) auf gleicher Höhe angeordnet sind, so daß die äußere und die innere Bremsbacke (116, 120) identisch ausgebildet sind.

14. Niederhaltefeder nach einem der Ansprüche 8 bis 13, dadurch **gekennzeichnet**, daß die Niederhaltefeder (125, 145, 163, 181) mit einer Schlaufe (126) versehen ist, die einen Schacht (124) des Bremsengehäuses (102) durchragt und sich radial von außen auf dem Bremsengehäuse (102) abstützt.

15. Niederhaltefeder nach einem der Ansprüch 8 bis 14, dadurch **gekennzeichnet**, daß die Niederhaltefeder (125, 145, 163, 181) axial zwischen den Gehäusewänden eines äußeren Schenkels (122) und eines Betätigungsgehäuses (112) des Bremsengehäuses (102) vorgespannt angeordnet ist.

16. Niederhaltefeder nach einem der Ansprüche 8 bis 15, dadurch **gekennzeichnet**, daß die Niederhaltefeder (125, 145, 163, 181) einteilig aus einem Federdraht hergestellt ist.

17. Niederhaltefeder nach Anspruch 1, dadurch **gekennzeichnet**, daß die Niederhaltefeder (225) an der Bremsbacke (216, 220) derart gelagert ist, daß bei einer Schwenkbewegung der Bremsbacke (216, 220) die Bremsbacke (216, 220) gegenüber der Niederhaltefeder (225) in beiden Richtung reibschlüssig geführt ist.

18. Niederhaltefeder nach Anspruch 17, dadurch **gekennzeichnet**, daß die Niederhaltefeder (225) als Zentralfeder mit einem mittleren Abschnitt (245) ausgebildet ist, mit dem die Niederhaltefeder (225) in einem Schacht (224) des Bremsengehäuses (202) gehalten ist.

19. Niederhaltefeder nach Anspruch 17 oder 18, dadurch **gekennzeichnet**, daß die Niederhaltefeder (225) zwei Schenkel (251, 260, 276, 277) aufweist, von denen sich zumindest einer im wesentlichen in Umfangsrichtung erstreckt.

20. Niederhaltefeder nach einem der Ansprüche 17 bis 19, dadurch **gekennzeichnet**, daß der Schenkel (251) einen S-förmigen Abschnitt (259) aufweist.

21. Niederhaltefeder nach einem der Ansprüche 17 bis 20, dadurch **gekennzeichnet**, daß der Schenkel (251) L-förmig mit einem unteren Schenkelende (261, 262) ausgebildet ist, dessen Spitze (61′, 61′′) an der Bremsbacke (216, 220) gelagert ist.

22. Niederhaltefeder nach einem der Ansprüche 17 bis 21, dadurch **gekennzeichnet**, daß die Niederhaltefeder (225), insbesondere ihr unteres Schenkelende (261, 262), und die Bremsbacke (216, 220) zumindest teilweise zylinderförmige Oberflächen (253, 57′) aufweisen, von denen die eine an der andere reibschlüssig und ummantelnd anliegt.

23. Niederhaltefeder nach einem der Ansprüche 17 bis 22, dadurch **gekennzeichnet**, daß ein Federschenkelteil (255, 261, 262, 278, 279) eine äußere zylinderförmige Fläche (57′) aufweist, die an der Bremsbacke (216, 220) anliegt.

24. Niederhaltefeder nach einem der Ansprüche 17 bis 23, dadurch **gekennzeichnet,** daß an einem Fuß (52′) eines sich radial erhebenden Ansatzes (252) eine innere zylinderförmige Oberfläche (253) ausgebildet ist, an der die Niederhaltefeder (225) angreift.

25. Niederhaltefeder nach einem der Ansprüche 17 bis 24, dadurch **gekennzeichnet**, daß der Ansatz (252, 265) radial außen einen sich in Sekantenrichtung (241) erstreckenden Vorsprung (254) aufweist.

26. Niederhaltefeder nach einem der Ansprüche 17 bis 25, dadurch **gekennzeichnet**, daß der Schenkel (251) eine radial nach außen gerichtete Krümmung aufweist.

27. Niederhaltefeder nach einem der Ansprüche 17 bis 26, dadurch **gekennzeichnet**, daß die Niederhaltefeder (225) symmetrisch zu einer Symmetrieachse (231, 232) der Teilbelag-Scheibenbremse aufgebaut ist.

28. Niederhaltefeder nach einem der Ansprüche 17 bis 27, dadurch **gekennzeichnet**, daß die Niederhaltefeder (225) symmetrisch zu einer parallel versetzt zur Bremsscheibe (218) liegenden Ebene aufgebaut ist.

29. Niederhaltefeder nach einem der Ansprüch 17 bis 28, dadurch **gekennzeichnet**, daß die Niederhaltefeder (225) asymmetrisch zu einer parallel versetzt zur Bremsscheibe (218) liegenden Ebene aufgebaut ist.

30. Niederhaltefeder nach Anspruch 18, dadurch **gekennzeichnet**, daß der mittlere Abschnitt (245) der Niederhaltefeder (225, 271) eine Schlaufe (246) aufweist.

31. Niederhaltefeder nach Anspruch 30, dadurch **gekennzeichnet**, daß das Schenkelende (261, 262) gerollt ist.

32. Niederhaltefeder nach Anspruch 18, dadurch **gekennzeichnet**, daß zumindest ein Schenkelende (255, 261, 262, 278, 279) des Schenkel (251, 260, 276, 277) hinter einem sich radial erhebenden Ansatz (252, 265) der Bremsbacke (216, 220) einrastbar ist.

33. Bremsbacke für eine Teilbelag-Scheibenbremse mit einem Reibbelag und einer eine Umfangsfläche aufweisende Trägerplatte, an deren radial außen liegender Seite sich ein Ansatz im wesentlichen radial nach außen erstreckt, mit einer Niederhaltefeder nach einem der Ansprüche 17 bis 32, wobei der Ansatz zur Halterung der Niederhalterfeder dient, dadurch **gekennzeichnet**, daß am Fuß (52′) des Ansatzes (252) eine Nut (263, 264) gebildet ist, mit deren begrenzender Oberfläche (253) bzw. Kante (290, 291) die Niederhaltefeder (225) in Eingriff gebracht wird.

34. Bremsbacke nach Anspruch 33, dadurch **gekenn****zeichnet**, daß die Oberfläche (253) an einem Fuß (52′) des Ansatzes (252) zumindest teilweise zylinder′ förmig ausgebildet ist.

35. Bremsbacke nach einem der Ansprüche 33 oder 34, dadurch **gekennzeichnet**, daß der Ansatz (252) radial außen einen sich in Sekantenrichtung (241) erstreckenden Vorsprung (254) aufweist.

36. Bremsbacke nach einem der Ansprüche 33 bis 35, dadurch **gekennzeichnet**, daß der Vorsprung (254) die zylinderförmige Oberfläche (253) vergrößert.

37. Bremsbacke nach einem der Ansprüche 33 bis 36, dadurch **gekennzeichnet**, daß die zylinderförmige Oberfläche (253) einen Radius von 0,6 mm bis 1,0 mm, insbesondere 0,7 mm bis 0,9 mm (für Drahtfedern) aufweist.

38. Bremsbacke nach einem der Ansprüche 33 bis 36, dadurch **gekennzeichnet**, daß die zylinderförmige Oberfläche (253) einen Radius von 1,5 mm bis 4,0 mm, insbesondere von 2,0 mm bis 3,0 mm (für Blechfedern) aufweist.

## Claims

1. A hold down spring (2, 125, 145, 163, 181) lockable in a brake housing (40, 102, 202) for use on brake shoes (44, 116, 120) of spot-type disc brakes (101, 201), **characterized** in that the hold down spring (1, 125, 145, 163, 181) in the relaxed condition has two swingable spring leg halves (4, 6, 149, 152, 164, 165) being at an angle (200) in respect of each other, and in that at least at one of the spring leg halves (4, 6, 149, 152, 164, 165) open loops may be formed (147, 148, 168, 173, 178, 182) which have planes inclined in relation to the leg plane and also inclined in relation to each other and which serve to support at least one brake shoe (44, 116, 120) with respect to the brake housing (40, 102, 202).

2. A hold down spring as claimed in claim 1, **characterized** in that at each of the legs (4, 6) a first wing (8, 10) is fitted in such a manner that the one wing end (22, 28) is lockable into an undercut opening (49) in the brake housing (40), while the opposite wire portion (20, 26) can be supported resiliently at the backplate (42) of at least one brake shoe (44), and in that each of the legs (4, 6) is furnished with one second wing (14, 12) which extends substantially in the leg plane such that, taking support on the inside of the housing, it is capable of transmitting to the brake housing (40) radial forces taken up through the first wing (8, 10).

3. A hold down spring as claimed in claim 1 or 2, **characterized** in that it is configured as a wire spring.

4. A hold down spring as claimed in claim 3, **characterized** in that the first wing (8, 10) is substantially configured as a quadrangular wire loop (20, 21, 22, 23 and 26, 27, 28, 29, respectively).

5. A hold down spring as claimed in claim 4, **characterized** in that, to improve the spring effect, the wire loop (8, 10) is not closed, the opening being positioned such that the elastic side (22, 28) of the wire loop (8, 10) faces the abutment surface on the brake housing (40).

6. A hold down spring as claimed in any one of the claims 3 to 5,
**characterized** in that, to improve the spring effect, in the event of a swinging movement of the legs (4, 6) in respect of each other, the joining point (16, 17) of the legs (4, 6) is configured in the shape of a wire loop.

7. A hold down spring as claimed in claim 6,
**characterized** in that the wire loop (16) has substantially the shape of a circle which is open in the direction of the leg ends (4, 6).

8. A hold down spring as claimed in claim 1,
**characterized** in that the loops (147, 148, 168, 173, 178, 182) of the two spring leg halves (149, 152, 164, 165) are arranged symmetrically in relation to each other.

9. A hold down spring as claimed in claim 8,
**characterized** in that the loops (147, 148, 168, 173, 178, 182) succeeding each other along the spring leg halves (149, 152, 164, 165) serve alternately for taking support on the housing (102) and for taking support on the brake shoe (116, 120).

10. A hold down spring as claimed in any one of the claims 8 or 9,
**characterized** in that the loop (173) taking support on the brake housing (102) takes support in one or in both secant directions (141).

11. A hold down spring as claimed in any one of the claims 8 to 10,
**characterized** in that the external loop (147, 178) for the external brake shoe (120) ends in a free end (180) which extends at an inclination in respect of the wheel axis.

12. A hold down spring as claimed in any one of the claims 8 to 11,
**characterized** in that the internal loop (148, 168) extends with a leg (172) running at an inclination with respect to the wheel axis (49′) from the wall of the actuating housing (112) facing a brake disc (118) up beyond the brake disc (118).

13. A hold down spring as claimed in any one of the claims 8 to 12,
**characterized** in that the free end (180) and the leg (172) are positioned level with each other in secant direction (141) so that the external and the internal brake shoes (116, 120) have an identical configuration.

14. A hold down spring as claimed in any one of the claims 8 to 13,
**characterized** in that the hold down spring (125, 145, 163, 181) is furnished with a loop (126) which projects through an aperture (124) of the brake housing (102) and which takes support on the brake housing (102) radially from the outside.

15. A hold down spring as claimed in any one of the claims 8 to 14,
**characterized** in that the hold down spring (125, 145, 163, 181) is positioned axially prestressed between the housing walls of an external housing leg (122) and an actuating housing (112) of the brake housing (102).

16. A hold down spring as claimed in any one of the claims 8 to 15,
**characterized** in that the hold down spring (125, 145, 163, 181) is manufactured one-part from a spring wire.

17. A hold down spring as claimed in claim 1,
**characterized** in that the hold down spring (225) is supported on the brake shoe (216, 220) in such a fashion that, in the event of a swinging movement of the brake shoe (216, 220), the brake shoe (216, 220) is frictionally guided in respect of the hold down spring (225) in both directions.

18. A hold down spring as claimed in claim 17,
**characterized** in that the hold down spring (225) is configured as a central spring with a central section (245) with which the hold down spring (225) is retained within an aperture (224) of the brake housing (202).

19. A hold down spring as claimed in claim 17 or claim 18, **characterized** in that the hold down spring (225) is provided with two spring legs (251, 260, 276, 277), at least one of which extends substantially in circumferential direction.

20. A hold down spring as claimed in any one of the claims 17 to 19,
**characterized** in that the leg (251) is formed with an S-shaped section (259).

21. A hold down spring as claimed in any one of the claims 17 to 20,
**characterized** in that the leg (251) is configured L-shaped with a lower leg section (261, 262) whose tip (61′, 61˝) is supported at the brake shoe (216, 220).

22. A hold down spring as claimed in any one of the claims 17 to 21,
**characterized** in that the hold down spring (225), in particular its lower leg section (261, 262), and the brake shoe (216, 220) present at least partly cylindrical surfaces (253, 57′), of which the one is abutted on the other in a friction lock engagement and surroundingly.

23. A hold down spring as claimed in any one of the claims 17 to 22,
**characterized** in that the one spring leg section (255, 261, 262, 278, 279) is formed with an external cylindrical surface (57′) which is in abutment with the brake shoe (216, 220).

24. A hold down spring as claimed in any one of the claims 17 to 23,
**characterized** in that at a foot (52′) of a radially projecting attachment (252) an internal cylindrical surface (253) is configured at which the hold down spring (225) makes catch.

25. A hold down spring as claimed in any one of the claims 17 to 24,
**characterized** in that the attachment (252, 265) is furnished radially outside with a projection (254) extending in secant direction (241).

26. A hold down spring as claimed in any one of the claims 17 to 25,
**characterized** in that the leg (251) is formed with a radially outwardly directed curvature.

27. A hold down spring as claimed in any one of the claims 17 to 26,
**characterized** in that the hold down spring (225) is configured symmetrically in respect of an axis of symmetry (231, 232) of the spot-type disc brake.

28. A hold down spring as claimed in any one of the claims 17 to 27,
**characterized** in that the hold down spring (225) is configured symmetrically in respect of a plane which is positioned offset in parallel direction with respect to the brake disc (218).

29. A hold down spring as claimed in any one of the claims 17 to 28,
**characterized** in that the hold down spring (225) is configured asymmetrically in respect of a plane which is positioned offset in parallel direction with respect to the brake disc (218).

30. A hold down spring as claimed in claim 18,
**characterized** in that the central section (245) of the hold down spring (225, 271) is provided with a loop (246).

31. A hold down spring as claimed in claim 30,
**characterized** in that the leg end (261, 262) is rolled.

32. A hold down spring as claimed in claim 18,
**characterized** in that at least one leg end (255, 261, 262, 278, 279) of the leg (251, 260, 276, 277) is lockable behind a radially projecting attachment (252, 265) of the brake shoe (216, 220).

33. A brake shoe for a spot-type disc brake with a friction lining and with a carrier plate provided with a circumferential surface, at the radially external side of which an attachment extends substantially outwardly in radial direction, comprising a hold down spring as claimed in any one of the claims 17 to 32, the attachment serving to secure the hold down spring, **characterized** in that at the foot (52′) of the attachment (252) a groove (263, 264) is formed, with the bounding surface (253) or edge (290, 291), respectively, of which the hold down spring (225) is brought into engagement.

34. A brake shoe as claimed in claim 33,
**characterized** in that the surface (253) at a foot (52′) of the attachment (252) is configured at least partly cylindrically.

35. A brake shoe as claimed in any one of the claims 33 or 34,
**characterized** in that the attachment (252) is furnished radially outside with a projection (254) extending in secant direction (241).

36. A brake shoe as claimed in any one of the claims 33 to 35,
**characterized** in that the projection (254) increases the size of the cylindrical surface (253).

37. A brake shoe as claimed in any one of the claims 33 to 36,
**characterized** in that the cylindrical surface (253) has a radius of 0.6 mm to 1.0 mm, in particular 0.7 mm to 0.9 mm (for wire springs).

38. A brake shoe as claimed in any one of the claims 33 to 36,
**characterized** in that the cylindrical surface (253) has a radius of 1.5 mm to 4.0 mm, in particular 2.0 mm to 3.0 mm (for sheet metal springs).

## Revendications

1. Ressort de maintien (2, 125, 145, 163, 181), pour plaquettes de frein (44, 116, 120) d'un frein à disque à garnitures partielles (101, 201), qui est agencé de façon à pouvoir s'enclencher dans un boîtier de frein (40, 102, 202), caractérisé en ce qu'à l'état détendu, le ressort de maintien (2, 125, 145, 163, 181) comporte deux moitiés formant branche de ressort (4, 6, 149 ,152, 164, 165) qui sont agencées de façon à pouvoir pivoter l'une vis-à-vis de l'autre en faisant entre elles un angle (200) et en ce que, sur au moins l'une des moitiés formant branche de ressort (4, 6, 149, 152, 164, 165), il est réalisé, au formage, des boucles (147, 148, 168, 173, 178, 182) éventuellement ouvertes qui comportent des plans inclinés vis-à-vis du plan de la branche et inclinés aussi entre eux et qui servent à l'appui d'au moins une plaquette de frein (44, 116, 120) contre le boîtier de frein (40, 102, 202).

2. Ressort de maintien selon la revendication 1, caractérisé en ce qu'une première aile (8, 10) est disposée sur chaque branche (4, 6) d'une façon telle qu'une extrémité (22, 28) de l'aile peut s'enclencher dans un évidement en contre-dépouille (49) ménagé dans le boîtier de frein (40), tandis que la section opposée de fil métallique (20, 26) peut prendre appui élastiquement sur la plaquette de support (42) d'au moins une plaquette de frein (44) et en ce que chacune des branches (4, 6) comporte une seconde aile (14, 12) qui s'étend pratiquement dans le plan de la branche d'une façon telle qu'en prenant appui à l'intérieur du boîtier, elle peut transmettre au boîtier de frein (40) des forces radiales reçues par l'intermédiaire de la première aile (8, 10).

3. Ressort de maintien selon la revendication 1 ou 2, caractérisé en ce qu'il est réalisé sous la forme d'un ressort en fil métallique.

4. Ressort de maintien selon la revendication 3, caractérisé en ce que la première aile (8, 10) est réalisée pratiquement sous la forme d'une boucle rectangulaire de fil métallique (20, 21, 22, 23 ou 26, 27, 28, 29).

5. Ressort de maintien selon la revendication 4, caractérisé en ce qu'afin d'améliorer l'action élastique, la boucle de fil métallique (8, 10) n'est pas fermée, l'ouverture étant disposée d'une façon telle que le côté élastique (22, 28) de la boucle de fil métallique (8, 10) fait face à la surface d'appui située sur le boîtier de frein (40).

6. Ressort de maintien selon l'une des revendications 3 à 5, caractérisé en ce qu'afin d'améliorer l'action élastique lors d'un mouvement de pivotement des branches (4, 6) l'une vis-à-vis de l'autre, la zone (16, 17) d'aboutement des branches (4, 6) est réalisée sous la forme d'une boucle de fil métallique.

7. Ressort de maintien selon la revendication 6, caractérisé en ce que la boucle de fil métallique (16) a pratiquement la forme d'un cercle ouvert vers les extrémités de branche (4, 6).

8. Ressort de maintien selon la revendication 1, caractérisé en ce que les boucles (147, 148, 168, 173, 178, 182) des deux moitiés formant branche de ressort (149,152,164,165) sont symétriques l'une de l'autre.

9. Ressort de maintien selon la revendication 8, caractérisé en ce que les boucles (147, 148, 168, 173, 178, 182) qui se succèdent le long de la boucle formant branche de ressort (149, 152, 164, 165) servent alternativement à l'appui sur le boîtier de frein (102) et à l'appui sur la plaquette de frein (116, 120).

10. Ressort de maintien selon l'une des revendications 8 et 9, caractérisé en ce que la boucle (173) qui prend appui sur le boîtier de frein (102) prend appui suivant une ou deux directions tangentielles (141).

11. Ressort de maintien selon l'une des revendications 8 à 10, caractérisé en ce que la boucle extérieure (147, 178) associée à la plaquette de frein extérieure (120) se termine par une extrémité libre (180) qui est orientée d'une manière inclinée vis-à-vis de l'axe de la roue.

12. Ressort de maintien selon l'une des revendications 8 à 11, caractérisé en ce que la boucle intérieure (148, 168) s'étend, par une branche (172) orientée d'une manière inclinée vis-à-vis de l'axe (49′) de la roue, de la paroi du boîtier d'actionnement (112) qui fait face à un disque de frein (118) jusqu'au-delà de ce disque de frein (118).

13. Ressort de maintien selon l'une des revendication 8 à 12, caractérisé en ce que l'extrémité libre (180) et la branche (172) sont disposées au même niveau suivant la direction tangentielle (141), de sorte que la plaquette de frein extérieure (116) et la plaquette de frein intérieure (120) ont une structure identique.

14. Ressort de maintien selon l'une des revendications 8 à 13, caractérisé en ce que le ressort de maintien (125, 145, 163, 181) comporte une boucle (126) qui traverse un évidement (124) du boîtier de frein (102) et prend appui, de l'extérieur dans le sens radial, sur le boîtier de frein (102).

15. Ressort de maintien selon l'une des revendications 8 à 14, caractérisé en ce que le ressort de maintien (125, 145, 163, 181) est disposé en étant soumis axialement à une précontrainte entre les parois de boîtier d'une branche extérieure (122) et d'un boîtier d'actionnement (112) du boîtier de frein (102).

16. Ressort de maintien selon l'une des revendications 8 à 15, caractérisé en ce que le ressort de maintien (125, 145, 163, 181) est réalisé d'une pièce en fil métallique à ressort.

17. Ressort de maintien selon la revendication 1, caractérisé en ce que le ressort de maintien (225) est monté sur la plaquette de frein (216, 220) d'une façon telle que, lors d'un mouvement de pivotement de la plaquette de frein (216, 220), cette plaquette de frein (216, 220) est guidée par effet de friction dans les deux sens à l'encontre du ressort de maintien (225).

18. Ressort de maintien selon la revendication 17, caractérisé en ce que le ressort de maintien (225) est réalisé sous la forme d'un ressort central comportant une section centrale (245) par laquelle le ressort de maintien (225) est maintenu dans un évidement (224) du boîtier de frein (202).

19. Ressort de maintien selon la revendication 17 ou 18, caractérisé en ce que le ressort de maintien (225) comporte deux branches (251, 260, 276, 277) dont au moins l'une est orientée essentiellement suivant la direction circonférentielle.

20. Ressort de maintien selon l'une des revendications 17 à 19, caractérisé en ce que la branche (251) comporte une section (259) en S;

21. Ressort de maintien selon l'une des revendications 17 à 20, caractérisé en ce que la branche (251) est réalisée avec une forme en L comportant une extrémité inférieure de branche (261, 262) dont une pointe (61′, 61˝) est montée sur la plaquette de frein (216, 220).

22. Ressort de maintien selon l'une des revendications 17 à 21, caractérisé en ce que le ressort de maintien (225), notamment son extrémité inférieure de branche (261, 262), et la plaquette de frein (216, 220) comportent des surfaces (253, 57′) au moins partiellement cylindriques dont l'une est appliquée sur l'autre par effet de friction et en l'entourant.

23. Ressort de maintien selon l'une des revendications 17 à 22, caractérisé en ce qu'une partie formant branche de ressort (255, 261, 262, 278, 279) comporte une surface cylindrique extérieure (57′) qui est appliquée sur la plaquette de frein (216, 220).

24. Ressort de maintien selon l'une des revendications 17 à 23, caractérisé en ce qu'à la base (52′) d'un talon (252) en surélévation radiale, il est réalisé une surface cylindrique intérieure (253) sur laquelle le ressort de maintien (225) vient en prise.

25. Ressort de maintien selon l'une des revendications 17 à 24, caractérisé en ce que le talon (252, 265) comporte, à l'extérieur dans le sens radial, une partie en saillie (254) qui est orientée suivant une direction tangentielle (241).

26. Ressort de maintien selon l'une des revendications 17 à 25, caractérisé en ce que la branche (251) présente une courbure dirigée radialement vers l'extérieur.

27. Ressort de maintien selon l'une des revendications 17 à 26, caractérisé en ce que le ressort de maintien (225) a une structure symétrique vis-à-vis d'un axe de symétrie (231, 232) du frein à disque à garnitures partielles.

28. Ressort de maintien selon l'une des revendications 17 à 27, caractérisé en ce que le ressort de maintien (225) a une structure symétrique vis-à-vis d'un plan qui est disposé d'une manière parallèle et décalée vis-à-vis du disque de frein (218).

29. Ressort de maintien selon l'une des revendications 17 à 28, caractérisé en ce que le ressort de maintien (225) a une structure asymétrique vis-à-vis d'un plan disposé d'une manière parallèle et décalée vis-à-vis du disque de frein (218).

30. Ressort de maintien selon la revendication 18, caractérisé en ce que le tronçon central (245) du ressort de maintien (225, 271) comporte une boucle (246).

31. Ressort de maintien selon la revendication 30, caractérisé en ce que l'extrémité de branche (261, 262) est enroulée.

32. Ressort de maintien selon la revendication 18, caractérisé en ce qu'au moins une extrémité de branche (255, 261, 262, 278, 279) de la branche (251, 260, 276, 277) est agencée de façon à pouvoir s'enclencher derrière un talon (252, 265) de la plaquette de frein (216, 220) qui est en surélévation dans le sens radial.

33. Plaquette de frein, pour frein à disque à garnitures partielles, comprenant une garniture de friction et une plaquette de support qui comporte une surface circonférentielle et sur une face radialement extérieure de laquelle un talon s'étend d'une manière pratiquement radiale vers l'extérieur, comprenant un ressort de maintien selon l'une des revendication 17 à 32, le talon servant au maintien du ressort de maintien, caractérisée en ce qu'à la base (52′) du talon (252), il est formé une rainure (263, 264), le ressort de maintien (225) étant amené en prise avec une surface (253) ou un bord (290, 291) qui délimite la rainure.

34. Plaquette de frein selon la revendication 33, caractérisée en ce que la surface (253) située à la base (52′) du talon (252) a une forme au moins partiellement cylindrique.

35. Plaquette de frein selon l'une des revendications 33 et 34, caractérisée en ce que le talon (252) comporte, à l'extérieur dans le sens radial, une partie en saillie (254) qui est orientée suivant une direction tangentielle (241).

36. Plaquette de frein selon l'une des revendications 33 à 35, caractérisée en ce que la partie en saillie (254) accroît la surface cylindrique (253).

37. Plaquette de frein selon l'une des revendications 33 à 36, caractérisée en ce que la surface cylindrique (253) a un rayon de courbure compris entre 0,6 mm et 1,0 mm, notamment entre 0,7 mm et 0,9 mm (pour des ressorts en fil métallique).

38. Plaquette de frein selon l'une des revendications 33 à 36, caractérisée en ce que la surface cylindrique (253) a un rayon de courbure compris entre 1,5 mm et 4,0 mm, notamment entre 2,0 mm et 3,0 mm (pour des ressorts en tôle).
